(19) Europäisches Patentamt
European Patent Office
Office européen des brevets

(11) **EP 1 711 892 B1**

(12) **EUROPÄISCHE PATENTSCHRIFT**

(45) Veröffentlichungstag und Bekanntmachung des Hinweises auf die Patenterteilung:
**18.02.2009 Patentblatt 2009/08**

(21) Anmeldenummer: **04762702.1**

(22) Anmeldetag: **20.08.2004**

(51) Int Cl.:
**G06F 11/14** *(2006.01)*    **G06F 11/20** *(2006.01)*
**G06F 9/50** *(2006.01)*    **H04L 29/08** *(2006.01)*
**H04L 29/14** *(2006.01)*

(86) Internationale Anmeldenummer:
**PCT/DE2004/001862**

(87) Internationale Veröffentlichungsnummer:
**WO 2005/073852 (11.08.2005 Gazette 2005/32)**

(54) **VERFAHREN ZUM BESTIMMEN EINES ÜBERNAHMESZENARIOS DER SOFTWAREEINHEITEN BEI EINEM RECHNERAUSFALL IN EINER SERVERFARM**

METHOD FOR DETERMINING A REASSIGNMENT SCENARIO OF SOFTWARE MODULES IN CASE OF A COMPUTER FAILURE IN A SERVER FARM

PROCEDE PERMETTANT DE DETERMINER UN SCENARIO DE PRISE EN CHARGE DES MODULES LOGICIELS EN CAS DE DEFAILLANCE D'UN ORDINATEUR DANS UN PARC DE SERVEURS

(84) Benannte Vertragsstaaten:
**AT BE BG CH CY CZ DK EE ES FI FR GB GR HU IE IT LI LU MC NL PL PT RO SE SI SK TR**

(30) Priorität: **02.02.2004   DE 102004005128**

(43) Veröffentlichungstag der Anmeldung:
**18.10.2006   Patentblatt 2006/42**

(73) Patentinhaber: **Fujitsu Siemens Computers GmbH**
**80807 München (DE)**

(72) Erfinder: **HARTUNG, Klaus**
**33154 Salzkotten (DE)**

(74) Vertreter: **Epping - Hermann - Fischer**
**Patentanwaltsgesellschaft mbH**
**Ridlerstraße 55**
**80339 München (DE)**

(56) Entgegenhaltungen:
WO-A2-03/102772          US-A- 6 088 727
US-A- 6 134 673          US-A1- 2002 184 571
US-B1- 6 192 401

• SIEMENS BUSINESS SERVICES GMBH: "Release Notice: PRIMECLUSTER Wizard Tools V4.1A20"[Online] Dezember 2003 (2003-12), Seiten 1-9, XP002315570 Gefunden im Internet: URL:http://www.its.siemens.de/lobs/its/its _sc/fgm_en/solaris/wiz41a20_en.htm> [gefunden am 2005-01-31]
• SIEMENS BUSINESS SERVICES GMBH & CO OHG: "Release Notice: PRIMECLUSTER Wizard Tools V4.1A10"[Online] April 2003 (2003-04), Seiten 1-6, XP002316166 Gefunden im Internet: URL:http://www.its.siemens.de/lobs/its/its _sc/fgm_en/solaris/wiz41a_en.htm> [gefunden am 2005-02-02]

**Beschreibung**

Die Erfindung betrifft ein Verfahren zum Betreiben einer Serverfarm aufweisend eine Anordnung mehrerer Rechner, die zur Ausführung einer Vielzahl von Softwareeinheiten eingerichtet sind, und einen zusätzlichen Kontrollrechner zur Überwachung der Rechner und zum Eingriff in die Rechner, wobei wiederholt eine Statusüberwachung der Rechner durchgeführt wird.

Derartige Rechneranordnungen sind unter anderem unter dem Begriff Serverfarm bekannt. Serverfarmen bestehen normalerweise aus einer großen Anzahl identischer Server, die im folgenden auch Rechner genannt werden, auf denen die gleichen oder unterschiedliche Dienste oder Anwendungen laufen. Da alle Server die Dienste und Anwendungen unabhängig voneinander ausführen, haben Fehler auf einem Server keinen unmittelbaren Einfluß auf den Rest der Serverfarm. Nutzeranfragen werden nach festgelegten Regeln auf alle Serverfarmmitglieder verteilt. Dies ist die Aufgabe des Kontrollrechners. Implementierte Mechanismen zur Lastverteilung stellen sicher, daß die Auslastung der einzelnen Server den jeweiligen Verarbeitungskapazitäten entspricht.

Der Ausfall eines Servers ist verhältnismäßig unproblematisch, da nur wenige Dienste und Anwendungen hiervon betroffen sind. Da es sich bei den einzelnen Rechner um verhältnismäßig kleine und damit kostengünstige Geräte handelt, ist es aus Kostensicht unproblematisch, einen oder mehrere Ersatzrechner bereitzuhalten, auf die nach dem Ausfall eines Rechners die betroffenen Softwareeinheiten, also z.B. Dienste und Anwendungen übertragen werden, um so den Normalbetrieb wieder herzustellen.

Serverfarmen bestehen aber oft aus mehreren hundert Rechnern. Bei diesen sogenannten Bladeservern entfällt der externe Verkabelungsaufwand, da die Rechner in Form einer Einsteckkarte aufgenommen und angeschlossen werden. Problematisch ist bei dieser Bauart jedoch, daß bei Ausfall beispielsweise einer Stromversorgungseinheit mehrere Rechner betroffen sind und somit mehrere Rechner gleichzeitig ausfallen. Aus wirtschaftlichen Erwägungen können nicht für jeden Fall so viele Ersatzrechner bereitgestellt werden, wie aufgrund des Ausfalls eigentlich benötigt werden. Es ist somit nicht in jedem Fall ein zufriedenstellender Betrieb der Rechneranordnung gewährleistet.

Es ist bekannt, bei Ausfall einer Softwareeinheit durch Ausfall eines Rechners die Softwareeinheit auf einen Ersatzrechner zu übertragen, das heißt dort neu zu starten. Bei Ausfall mehrerer Rechner sind dementsprechend mehrere Softwareeinheiten betroffen. Für jede Softwareeinheit wird nun versucht, einen Ersatzrechner beziehungsweise eine ausreichend große freie Kapazität auf einem Ersatzrechner zu finden, um die Softwareeinheit neu starten zu können. Dabei kommt es zu Konkurrenzsituationen, wodurch der störungsfreie Weiterbetrieb gefährdet ist.

Die US 6,088,727 offenbart ein Verfahren zum Betreiben eines Clusters, bei dem beispielsweise wegen eines Rechnerausfalls gestoppte "Packages" auf einen anderen Rechner des Clusters verlagert werden können. Dabei werden alle Packages nach einer Priorität sortiert und sodann nacheinander in dieser Reihenfolge verarbeitet. Dabei werden, angefangen von dem Package mit der höchsten Priorität, so viele Packages wie möglich auf einen anderen Rechner verlagert und dabei eventuell bereits laufende Packages geringerer Priorität gestoppt.

Aus der WO 03/102772 A ist bekannt, verschiedene Parameter zu berücksichtigen, um eine Hochverfügbarkeit von Anwendungen zu ermöglichen. Neben besonderen Systemanforderungen einzelner Anwendungen wird insbesondere eine Prioritätsinformation ausgewertet, so dass Anwendungen niedriger Priorität verschoben werden, um Kapazität für Anwendungen höherer Priorität zu schaffen.

Die US 6 192 401 B beschreibt eine optimierte Bildung von Clustern durch den Einsatz von Rechner-Gewichtungsfaktoren. Diese werden durch technische Merkmale der Rechner bestimmt. Dadurch kann bei der Bildung eines Clusters aus einer Vielzahl möglicher Rechner eine im Hinblick auf die Leistungsfähigkeit optimale Clusterkonfiguration bestimmt werden.

Aufgabe der Erfindung ist es, ein Verfahren zum Betreiben einer Anordnung mehrerer Rechner anzugeben, bei dem eine möglichst gute Verfügbarkeit der Softwareeinheiten, die auf der Rechneranordnung ausgeführt werden, gewährleistet ist. Dabei soll sowohl der Ausfall eines einzelnen Rechners als auch mehrerer Rechner berücksichtigt werden können.

Diese Aufgabe wird durch ein Verfahren gemäß Patentanspruch 1 und durch eine Vorrichtung gemäß Patentanspruch 9 gelöst.

Das erfindungsgemäße Verfahren folgt der Erkenntnis, daß unter Umständen nicht für alle Softwareeinheiten ein Rechner gefunden werden kann, der ausreichend freie Kapazität aufweist. Es wird ein Übernahmeszenario gesucht, das angibt, welche Softwareeinheiten auf welche Rechner übertragen werden. Durch die Gewichtung der Softwareeinheiten entsprechend ihrer Bedeutung wird der Vorteil erzielt, daß ein Übernahmeszenario bestimmt wird, das insgesamt betrachtet eine optimale Lösung darstellt, wobei also die wichtigeren Softwareeinheiten bevorzugt auf einen anderen Rechner übertragen werden, während unwichtige Softwareeinheiten nicht neu gestartet werden.

Der entscheidende Vorteil des vorliegenden erfindungsgemäßen Verfahrens ist, daß die Übertragung von Softwareeinheiten auf andere Rechner nicht nur in Bezug auf eine einzelne Softwareeinheit bestimmt wird, sondern die Serverfarm mit ihren Softwareeinheiten als Gesamtes betrachtet wird, um den Gesamtbetrieb so wenig wie möglich zu stören. Vorteilhaft ist darüber hinaus, daß nicht nur der Ausfall eines einzelnen Rechners berücksichtigt werden kann, sondern auch mehrere, gleichzeitig ausgefallene Rechner und die entsprechend ausgefallenen Softwareeinheiten in die Bestimmung eines Übernahmeszenarios einbezogen werden.

Bei dem erfindungsgemäßen Verfahren wird zunächst eine Vielzahl möglicher Übernahmeszenarien ermittelt und anschließend diese Szenarien unter Verwendung der Gewichtung der Softwareeinheiten bewertet. Anhand der Bewertung des gesamten Szenarios ist erkennbar, welches das insgesamt optimale Szenario ist.

In einer Weiterbildung der Erfindung schließt die Bestimmung eines Übernahmeszenarios ein, daß aktive Softwareeinheiten auf anderen Rechner beendet werden zur Schaffung freier Kapazität für die Übernahme von Softwareeinheiten ausgefallener Rechner. Vorteilhaft ist hierbei, daß unwichtige aktive Softwareeinheiten beendet werden, um Kapazität zu schaffen für die Übernahme von Softwareeinheiten mit einer größeren Bedeutung, die zuvor auf einem der ausgefallenen Rechner aktiv waren.

In einer günstigen Ausgestaltung erfolgt die Gewichtung anhand mehrerer Attribute, wobei ein erstes Attribut "Licence to kill" ein Maß für die Macht angibt, andere aktive Softwareeinheiten zur Schaffung freier Kapazitäten beenden zu lassen und ein zweites Attribut "Shutdown Limit" ein Maß für die Widerstandsfähigkeit gegenüber der Aufforderung zur Beendigung durch andere Softwarepakete zu deren Übertragung von einem ausgefallenen Rechner angibt. Anhand des ersten Attributs wird bestimmt, welche ausgefallenen Softwareeinheiten bevorzugt auf einem Ersatzrechner übertragen, das heißt dort neu gestartet werden. Das zweite Attribut wird dafür herangezogen herauszufinden, welche der aktiven Softwarepakete beendet werden, um Platz zu schaffen für die Übernahme von Softwarepaketen, die zuvor auf einem nun ausgefallenen Rechner aktiv waren.

Günstig dabei ist, daß das Verhalten der Rechneranordnung bei der Übernahme ausgefallener Softwareeinheiten von einem Administrator durch eine entsprechende Attributvergabe beeinflußt werden kann.

Softwareeinheiten können im Rahmen dieser Anmeldung Dienste, Anmeldungen oder Pakete aus einem Betriebssystem und Diensten und/oder Anwendungen sein. Die letztgenannten Pakete, die auch als "Images" bezeichnet werden, werden insbesondere bei großen Serverfarmen mit Bladeservern eingesetzt. Beim Booten eines Servers innerhalb der Serverfarm wird ein Image von einem zentralen Speicher geladen und auf dem Server zur Ausführung gebracht. Wenn ein zweiter Server mit der gleichen Anwendung gestartet werden soll, wird einfach eine Kopie des Images in den zweiten Server geladen und dort zur Ausführung gebracht. Der Konfigurationsaufwand ist auf diese Weise minimal.

Weitere vorteilhafte Ausgestaltungen der Erfindung sind in Unteransprüchen angegeben.

Die Erfindung wird nachfolgend anhand eines Ausführungsbeispiels näher erläutert. Es zeigen:

Figur 1 eine Anordnung mit mehreren Rechnern und einem Kontrollrechner, auf die das erfindungsgemäße Verfahren angewendet werden kann,

Figur 2 eine Tabelle entsprechend einem ersten Übernahmeszenario,

Figur 3 eine Tabelle entsprechend einem zweiten Übernahmeszenario und

Figur 4 ein Ablaufdiagramm eines Ausführungsbeispiels des erfindungsgemäßen Verfahrens.

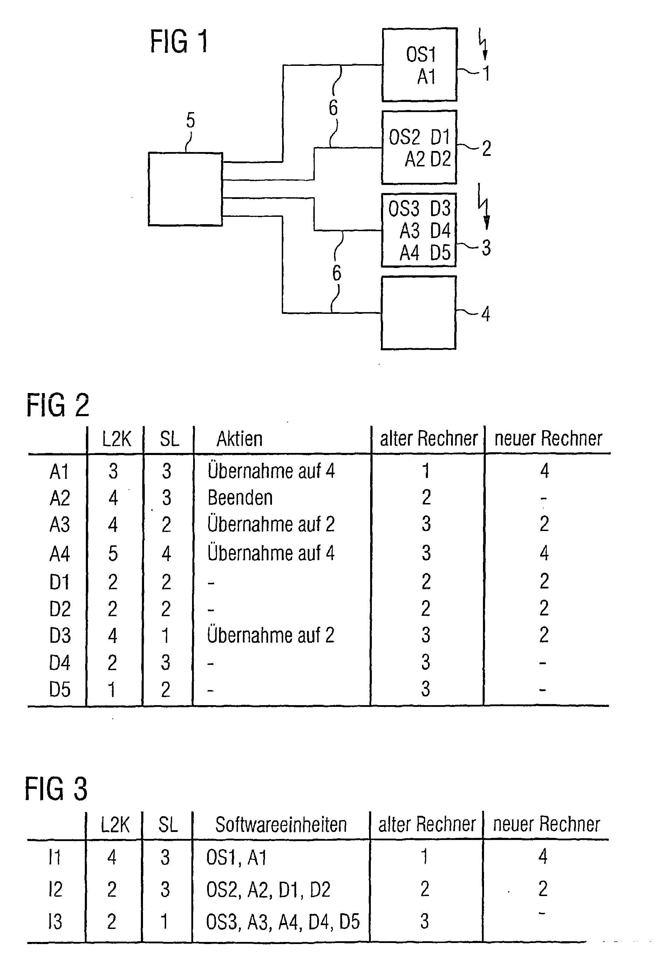

In der Figur 1 ist eine Anordnung mit mehreren Rechnern 1,2, 3, 4 und einem Kontrollrechner 5 dargestellt. Die Rechner 1, 2, 3 und 4 haben keine Verbindung, die zum Datenaustausch untereinander eingerichtet ist. Jedoch sind sie mit dem Kontrollrechner 5 über Leitungen 6 verbunden. Diese in beliebiger Weise realisierten Verbindungen mit den Leitungen 6 dienen dazu, die Rechner 1, 2, 3 und 4 zu überwachen und eventuell in die Abläufe auf diesen Rechnern einzugreifen.

In dem gezeigten Beispiel ist auf dem Rechner 1 ein Betriebssystem OS1 und eine Anwendung A1 aktiv. Aktiv bedeutet, daß sich das Betriebssystem und die Anwendung in einem regulären Betriebszustand befinden. Auf dem Rechner 2 ist ein Betriebssystem OS2 und eine Anwendung A2 aktiv. Außerdem laufen auf dem Rechner 2 zwei Dienste D1 und D2. Auf dem Rechner 3 ist ein Betriebssystems OS3 und zwei Anwendungen A3 und A4 sowie drei Dienste D3, D4 und D5 aktiv. Bei dem Rechner 4 handelt es sich um einen Ersatzrechner, auf dem im gezeigten Betriebszustand weder ein Betriebssystem noch eine Anwendung oder ein Dienst aktiv sind.

Der Kontrollrechner 5 überwacht in regelmäßigen Zeitabständen T die Rechner 1, 2 und 3 auf ihren Status um festzustellen, ob sie sich in einem regulären Betriebszustand befinden oder ob ein Fehlerzustand vorliegt (siehe Figur 2). Der Rechner 4 braucht nicht überwacht zu werden, da dem Kontrollrechner 5 der Status als Ersatzrechner bekannt ist. Die Überwachung kann derart ausgestaltet sein, daß der Kontrollrechner 5 eine Anfrage an die Rechner 1, 2, 3 und 4 schickt und dann darauf wartet, ob eine Antwort zurückgeschickt wird. In den Rechnern 1, 2, 3 und 4 können aber auch Detektoren vorgesehen werden, die selbsttätig den Betriebszustand überwachen und eine Fehlermeldung an den Kotrollrechner 5 senden, wenn eine Abweichung vom regulären Betriebszustand auftritt. Es können auch beide Arten der Überwachung kombiniert sein, das heißt die Rechner 1, 2, 3 und 4 senden selbsttätig Fehlermitteilungen, reagieren aber auch auf Anfragen von dem Kontrollrechner 5.

Wenn im Rahmen der Beschreibung der Erfindung von dem Empfangen oder Senden von Anfragen oder Mitteilungen durch die "Rechner" gesprochen wird, umfaßt dies sowohl eine hardwareseitige Informationsverarbeitung als auch die softwaremäßige Verarbeitung durch die jeweils aktiven Betriebsysteme, Anwendungen oder Dienste.

Die Rechner 1, 2 und 3 können mit unterschiedlichen Betriebssystemen betrieben werden. Es ist lediglich darauf zu achten, daß die Nachrichten- beziehungsweise Befehlsübermittlung über die Leitungen 6 nach einem einheitlichen Standard funktioniert, so daß der Kontrollrechner 5 mit allen Rechnern 1, 2, 3 und 4 kommunizieren kann.

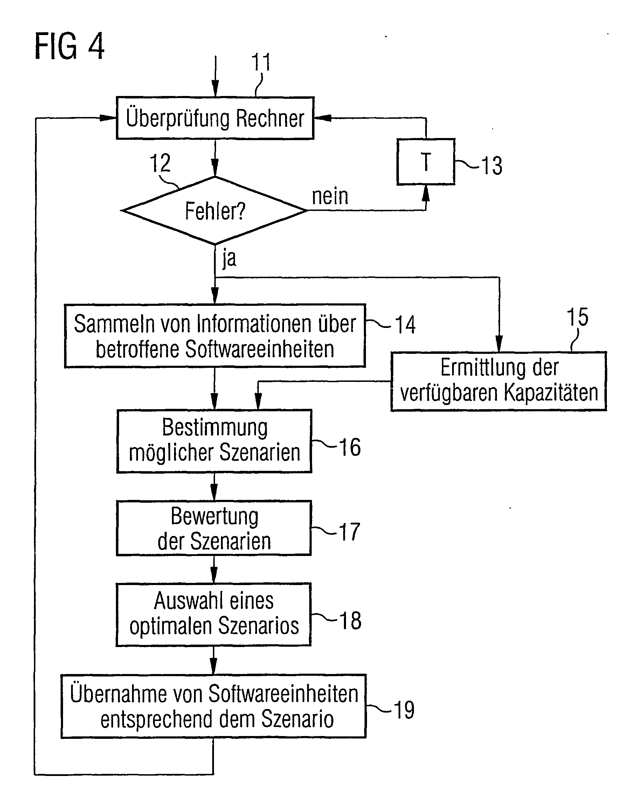

In der hier beschriebenen Ausführung wird gemäß Figur 4 in regelmäßigen Zeitabständen T eine Überprüfung der Rechner, 1, 2 und 3 durchgeführt (Schritt 11). Sollte im Schritt 12 kein Fehler festgestellt werden, wird auf den Zeitpunkt gewartet, zu dem eine erneute Überprüfung durchgeführt werden soll. Wurde ein Fehler detektiert, werden nachfolgend Informationen über die betroffenen Softwareeinheiten gesammelt (Schritt 14). In einem Beispielszenario wird angenommen, daß die Rechner 1 und 3 ausgefallen sind. Dieser Fehler wurde von dem Kontrollrechner 5 detektiert. In dem Schritt 14 werden nun Informationen über die von den Ausfällen betroffenen Softwareeinheiten gesammelt. Dabei wird festgestellt, daß die Anwendungen A1, A3 und A4 sowie die Dienste D3, D4 und D5 von dem Ausfall betroffen sind. Zusätzlich werden in einem nachfolgend oder parallel ablaufenden Schritt 15 die verfügbaren Kapazitäten ermittelt. Im vorliegenden Fall steht der Rechner 4 als Ersatzrechner zur Verfügung. Sollte die auf diesem verfügbare Kapazität nicht ausreichen, wäre zu prüfen, wie die Bedeutung der auf dem Rechner 2 aktiven Anwendungen A2 sowie der Dienste D1 und D2 im Verhältnis zur Bedeutung der zu übertragenden Anwendungen A1, A3 und A4 sowie der Dienste D3, D4 und D5 ist.

Nachdem nun die zu übertragenden Softwareeinheiten und die zur Verfügung stehenden Kapazitäten ermittelt wurden, können mögliche Szenarien für eine Übernahme der durch den oder die Ausfälle betroffenen Softwareeinheiten auf andere Rechner vorgenommen werden (Schritt 16). Aus der Vielzahl möglicher Szenarien muß anschließend ein Szenario ausgewählt werden, welches insgesamt optimal ist. Insgesamt optimal heißt hierbei, daß sowohl das Interesse an der Übernahme ausgefallener Softwareeinheiten auf andere Rechner berücksichtigt wird, als auch der Betrieb der noch aktiven Softwareeinheiten in möglichst vollständiger Weise beibehalten wird.

Grundsätzliche treten zwei Fälle auf. Im ersten Fall stehen genug freie Kapazitäten zur Verfügung, um sämtliche ausgefallene Softwareeinheit übernehmen zu können. Im anderen Fall ist die Anzahl ausgefallener Rechner größer als die Anzahl der Ersatzrechner. Daher muß in den Teilverfahren zur Bestimmung des Übernahmeszenarios zunächst bestimmt werden, welche der ausgefallenen Softwareeinheiten auf die Ersatzrechner übernommen werden. Die verbleibenden ausgefallenen Softwareeinheiten werden im Hinblick auf ihre Bedeutung untersucht und es wird festgelegt, ob sie auf einen anderen Rechner übertragen werden oder nicht, wobei das Beenden der Softwareeinheiten, die aktuell auf diesem Rechner laufen, erzwungen wird. Wenn keine Möglichkeit besteht, einen neuen Rechner für alle ausgefallenen Softwareeinheiten zu finden, werden die am wenigsten wichtige Softwareeinheiten der ausgefallenen Softwareeinheiten bestimmt und der gesamte Prozeß der Bestimmung des Übernahmeszenarios wird von vorne gestartet.

Bei der Erstellung möglicher Übernahmeszenarien ist zudem zu berücksichtigen, ob unter Softwareeinheit eine Anwendung oder ein Dienst verstanden wird oder ob eine Softwareeinheit einem Image entspricht. Im ersten Fall kann die Anwendung oder die Dienste auf einen Rechner übertragen werden, auf dem schon andere Anwendungen oder Dienste aktiv sind und der mit einem geeigneten Betriebssystem betrieben wird. Im zweiten Fall muß ein komplett freier Rechner zur Verfügung stehen, da das Image auch das Betriebssystem umfaßt und nur ein Image pro Rechner möglich ist.

Ein mögliches Szenario für die Übernahme von Anwendung und Diensten ist in der Tabelle von Figur 2 dargestellt. Den Anwendungen A1..A4 und die Dienste D1..D5 sind zwei Attribute "Licence to kill" (L2K) und "Shutdown limit" (SL) zugeordnet. Das erste Attribut L2K ist ein Maß für die Macht, andere aktive Softwareeinheiten zur Schaffung freier Kapazität durch den Kontrollrechner 5 beenden zu lassen. Das zweite Attribut SL ist ein Maß für die Widerstandsfähigkeit gegenüber der Aufforderung zur Beendigung durch andere Softwarepakete zu deren Übertragung von einem ausgefallenen Rechner. Ob eine Anwendung beendet und damit ausreichend Kapazität zur Übertragung einer anderen Anwendung zur Verfügung gestellt wird, hängt also von dem Attribut "Licence to kill" der zu übertragenden Anwendung und dem Attribut "Shutdown limit" der noch aktiven und eventuell zu beendenden Anwendung ab. Gleiches gilt, wenn es sich um einen Dienst handelt. Diesen sind ebenso die beschriebenen Attribute zugeordnet.

Zurückkommend auf das in Figur 1 beschriebene Szenario, gemäß dem die Rechner 1 und 3 ausgefallen sind, der Rechner 4 als Ersatzrechner zur Verfügung steht und auf dem Rechner 2 bereits eine Anwendung A2 und zwei Dienste D1 und D2 aktiv sind, könnte sich das in der Tabelle von Figur 2 gezeigte optimale Szenario ergeben. Die in der Tabelle eingetragenen Werte sind so zu verstehen, daß 1 der geringste und 5 der höchste Wert ist. Je höher der Wert, desto höher die Bedeutung der jeweiligen Anwendung oder des jeweiligen Dienstes. Die Anwendungen A4 und A1 werden gemäß diesem Beispielszenario auf dem Ersatzrechner 4 neu gestartet, werden also von diesem übernommen. Für die Anwendung A3 ist keine ausreichend freie Kapazität auf dem Rechner 4 mehr vorhanden. Das Attribut L2K besitzt jedoch den Wert 4, der größer ist als der Wert des Attributs SL der Anwendung A2. Aus der Gegenüberstellung dieser Werte ergibt sich, daß die Anwendung A2 zu beenden ist, damit die Anwendung A3 auf dem Rechner 2 neu gestartet werden kann.

Die Dienste D1 und D2 auf dem Rechner 2 können weiterlaufen. Der Dienst D3 auf dem Rechner 3 wird auf dem Rechner 2 neu gestartet. Die Dienste D4 und D5 haben keinen Platz mehr auf den Rechnern 2 und 4. Sie haben einen sehr geringen Wert bezüglich des Attributs "Licence to kill", so daß keine Dienste oder Anwendung beendet werden, um den Diensten D4 und D5 freie Kapazität zu schaffen. Diese Dienste können also nicht auf einen anderen Rechner übertragen werden.

In der Figur 3 wird die Übernahme nicht pro Anwendung oder Dienst betrachtet, sondern bei einer Übernahme kann nur das gesamte Image übernommen werden. Das Image I1 umfaßt ein Betriebssystem OS1 und eine Anwendung A1, wie sie auf dem Rechner A1 vor dem Ausfall aktiv waren. Das Image I2 umfaßt das auf dem Rechner 2 laufende Betriebssystems OS2, die Anwendung A2 und die Dienste D1 und D2. Das Image I3 umfaßt das vor dem Ausfall auf dem Rechner 3 aktive Betriebssystem OS3, die Anwendungen A3 und A4 sowie die Dienste D4 und D5. Den Images sind wiederum die Attribute L2K und SL zugeordnet.

Das Image I1 wird gemäß dem Beispielszenario von Figur 3 auf dem Rechner 4 neu gestartet, das Image I2 bleibt auf dem Rechner 2 aktiv und für das Image I3 kann kein freier Rechner gefunden werden. Zwar könnte das Image I2 beendet werden, um das Image I3 auf dem Rechner 2 neu zu starten, jedoch ist das Attribut "Licence to kill" des Images I3 mit dem Wert 2 geringer als der Wert des Attributs "Shut down limit" des Image I2. Das Image I3 besitzt demnach nicht die Macht, das Image I2 beenden zu lassen zur Schaffung freier Kapazitäten.

Im Schritt 17 werden also die Szenarien bewertet, indem die Attribute aller aktiven Anwendungen und aller von dem Ausfall betroffenen Softwareeinheiten mit den möglichen Szenarien verknüpft werden. In Schritt 18 erfolgt die Auswahl eines optimalen Szenarios, im beschriebenen Fall nach der Gewichtung durch die Attribute. In einem Schritt 19 wird das ermittelte optimale Übernahmeszenario umgesetzt, Softwareeinheiten beendet und ausgefallene Softwareeinheiten auf den neu bestimmten Rechnern neu gestartet, so daß eine Übernahme bewerkstelligt ist. Nach Erreichen dieses stabilen Zustandes beginnt das Verfahren mit der Überprüfung der Rechner auf ihren Status von vorne.

Die Randbedingungen für die Erstellung eines Szenarios folgt festgelegten Regeln. Im folgenden werden Regeln dargestellt, die für die Bildung von Übernahmeszenarien eine Rolle spielen können:

- ein Image kann nur auf einem Server zur gleichen Zeit laufen und ein Server kann nur ein Image zur gleichen Zeit aufnehmen;
- Ersatzrechner, die entweder untätig oder abgeschaltet sind, werden vorrangig zur Übernahme ausgefallener Softwareeinheiten eingesetzt;
- wenn nicht ausreichend Ersatzrechner vorhanden sind, werden aktive Rechner heruntergefahren, um Images aufzunehmen je nach dem Wert ihrer Attribute - entsprechend werden Anwendungen oder Dienste beendet zur Übernahme ausgefallener Dienste oder Anwendungen;
- die Teilverfahren zur Bestimmung des Übernahmeszenarios arbeiten derart, daß das ausgewählte Übernahmeszenario die geringsten Auswirkungen auf die aktiven Rechner hat - gleichzeitig soll das ausgewählte Übernahmeszenario der Bedingung genügen, möglichst viele ausgefallene Softwareeinheiten zu übernehmen;
- zunächst werden alle wichtigen Softwareeinheiten entsprechend den oben genannten Regeln und den ebenso beschriebenen Attributen auf andere Rechner übernommen - wenn kein Übernahmeszenario möglich ist, das allen Anforderungen genügt, werden ausgefallene Softwareeinheiten von der Bestimmung eines Übernahmeszenarios ausgenommen;
- es gibt nur eine Übernahme pro Softwareeinheit - Softwareeinheiten, die beendet wurden, können nicht ihrerseits das Beenden anderer aktiver Softwareeinheiten bewirken, es gibt keinen Domino-Effekt für Rechner mit einer geringen Priorität, weil sie häufig das Opfer von Übernahmen sind.

Damit ein Übernahmeszenario berechenbar bleibt, wird der Status der Rechner zu einem festgelegten Zeitpunkt betrachtet. Dies wird in festgelegten Zeitintervallen wiederholt. Alle Rechnerausfälle werden zur gleichen Zeit bei einer einzigen Bestimmungsinstanz behandelt, so daß die Anzahl ausgefallener Rechner zu einem bestimmten Zeitpunkt fest ist und sich nicht während der Bestimmung des Übernahmeszenarios ändert. Falls weitere Rechner während der Berechnung des Übernahmeszenarios ausfallen, werden diese Ausfälle erst zum nächsten Überwachungszeitpunkt berücksichtigt.

In einem erweiterten Verfahren kann die Inhaberschaft der Rechner und die Hardware der Rechner berücksichtigt werden, um nicht einen leistungsfähigen Rechner zu "verschwenden" für eine Softwareeinheit, die keine ausreichende Bedeutung für einen solchen Rechner besitzt. Die Berücksichtigung der Inhaberschaft eines Rechners ist wichtig, weil es in Serverfarmen üblich ist, daß ein Kunde einen eigenen Server in der Serverfarm betreiben läßt. Daraus ergibt sich zwangsläufig, daß ein solcher Rechner nicht als Rechner für die Übernahme fremder Softwareeinheiten zur Verfügung steht, sondern nur von diesem Kunden benutzt werden kann.

Die Inhaberschaft der Rechner wird durch ein drittes Attribut "Servergroup" berücksichtigt. Ein Übernahmeszenario wird nur unter Verwendung von Rechnern bestimmt, die der gleichen "Servergroup" zugehörig sind. Die Art der Hardware des Rechners wird durch ein Attribut "Serverclass" berücksichtigt. Je mehr die ausgefallenen Rechner der Hardware der Rechner entsprechen, die für die Übernahme in Betracht gezogen werden, desto größer ist die Affinität zu diesem Rechner. "Passend" ist in Anbetracht der Integer- und Stringvergleiche festgelegt, wie unten ausgeführt ist.

In einer praktischen Realisierung werden die Attribute als Strings oder Integers gespeichert. Wenn die individuellen Attribute verglichen werden, finden die Operatoren '<, <=, >, >=, ==, /=' Verwendung. Für Strings ist nur der Operator '==' zulässig. Basierend auf diesen Einstellungen können alle Rechner und Softwareeinheiten verglichen werden unter Verwendung der Operatoren, die oben spezifiziert wurden. Dadurch kann das optimale Übernahmeszenario bestimmt werden.

Auf diese Weise werden alle Rechner und alle Softwareeinheiten untersucht, ob sie ein potentielles Ziel für eine Übernahme sind. Dies wird natürlich nur dann durchgeführt, wenn es erforderlich ist, das heißt, wenn Rechner ausgefallen sind und möglichst auf einen anderen Rechner übertragen werden sollen.

Die Hauptaufgabe ist, die richtigen Rechner oder Softwareeinheiten zu finden, die heruntergefahren werden im Anblick der laufenden Rechner oder Softwareeinheiten. Die Bestimmung dieses Szenarios kann ein langwieriger Prozeß sein. Bei einer großen Serverfarm mit mehreren hundert Rechnern S und keinen Ersatzrechnern, berechnet sich die Anzahl der zu berücksichtigten Variationen bei der Bestimmung des Übernahmeszenarios bei einer kleinen Anzahl ausgefallener Rechner F zu

$$\binom{S-F}{F}.$$

Für ein Serverrack mit 20 Rechnern ist die Anzahl der Permutationen beim Ausfall von fünf Rechnern größer als 3.000. Wenn ein zweites Serverrack mit weiteren 20 Rechnern hinzukommt, ist die Anzahl der Permutationen größer als 50.000.

Um aus dieser großen Anzahl möglicher Übernahmeszenarien ein optimales herauszufinden, kann es erforderlich sein, besondere Rechenmethoden einzusetzen. Es ist zu beachten, daß der Gesamteinfluß jedes Übernahmeszenarios berücksichtigt werden muß. Die Auswirkungen hängen von den Attributen ab, die oben genannt wurden.

Während die möglichen Übernahmeszenarien berechnet werden, werden vorteilhafterweise bereits gleichzeitig die Auswirkungen auf das Gesamtsystem fortlaufend berechnet und vorhergesagt. Nur die Szenarien, bei denen die Möglichkeit besteht, geringere Auswirkungen auf das Gesamtsystem zu haben als die bereits untersuchten Übernahmeszenarien, werden detailliert bestimmt. Dies erfordert eine Art der Sortierung der zu untersuchenden Permutationen um sicherzustellen, daß die Lösungen mit den kleinsten Auswirkungen zuerst behandelt werden.

Dies beschleunigt die Bestimmung signifikant. Die Bestimmung wird vorab beendet, wenn ein Übernahmeszenario gefunden wurde, das keine Auswirkungen auf aktive Softwareeinheiten hat. Bei der Berechnung kommt vorzugsweise ein sogenannter Greedy-Algorithmus zur Anwendung.

Das beschriebene Konzept ist in der Lage, ein Übernahmeszenario zu finden, welches die laufenden Rechner und Softwareeinheiten so wenig wie möglich beeinflußt, wobei trotzdem so viele Softwareeinheiten wie möglich übernommen werden.

Das erfindungsgemäße Verfahren ist auch bei virtuelle Servern einsetzbar. Virtuelle Server sind dadurch gebildet, daß ein oder mehrere große Server in "logische" Server unterteilt sind und die Anordnung dann so betrieben werden kann, als handele es sich um mehrere physikalische Server. Die dazu eingesetzte Software wird beispielsweise VmWare genannt.

In einem entsprechenden Ausführungsbeispiel der Erfindung fährt ein großer LINUX-Server eine Reihe von WINDOWS-Emulationen via VmWare. Die einzelnen Betriebssysteme werden genauso überwacht und gegebenenfalls auf einen anderen virtuellen Server verlagert, wie dies bei mehreren physikalischen Servern der Fall wäre. Man kann das System auch so konfigurieren, daß ein Rechner vor der Verlagerung zunächst neu gestartet wird. Das ist insbesondere bei virtuellen Rechnern interessant. Wenn nicht genügend VmWare-Server zur Verfügung stehen, kann der "normale" Verlagerungsweg beschritten werden, oder man verdrängt ein weniger wichtiges Image und starte statt dessen VmWare, um die ausgefallenen oder überlasten virtuellen Server verlagern zu können.

Bezugzeichenliste

| 1, 2, 3, 4 | Rechner |
|---|---|
| 5 | Kontrollrechner |
| 6 | Leitungen |
| 11 .. 19 | Verfahrensschritte |

| OS1, OS2, OS3 | Betriebssysteme |
| A1, A2, A3,A4 | Anwendungen |
| D1, D2, D3, D4, D5 | Dienste |

**Patentansprüche**

1. Verfahren zum Betreiben einer Serverfarm aufweisend eine Anordnung mehrerer Rechner (1, 2, 3, 4), die zur Ausführung einer Vielzahl von Softwareeinheiten (A1..A4, D1.. D5) eingerichtet sind, und einen zusätzlichen Kontrollrechner (5) zur Überwachung der Rechner (1, 2, 3, 4) und zum Eingriff in die Rechner (1, 2, 3, 4) und wobei wiederholt eine Statusüberwachung der Rechner (1, 2, 3, 4) durchgeführt wird,
**dadurch gekennzeichnet, daß**
den Softwareeinheiten (A1..A4, D1.. D5) eine Gewichtung (L2K, SL) entsprechend ihrer Bedeutung zugeordnet ist und bei Ausfall eines Rechners (1, 2, 3, 4) die Verfahrensschritte ausgeführt werden:

   - Sammeln von Informationen, welche der Rechner (1, 2, 3, 4) zum Überwachungszeitpunkt ausgefallen sind und welche Softwareeinheiten (A1..A4, D1.. D5) davon betroffen sind,
   - Bestimmung einer Vielzahl möglicher, d.h. mindestens zweier Übernahmeszenarien für die Übernahme der durch den oder die Ausfällen betroffenen Softwareeinheiten (A1..A4, D1.. D5) auf andere Rechner (1, 2, 3, 4), wobei ein Übernahmeszenario jeweils angibt, welche Softwareeinheiten (A1..A4, D1.. D5) auf welchen Rechner (1, 2, 3, 4) übertragen werden,
   - Bewertung dieser Übernahmeszenarien unter Verwendung der Gewichtung (L2K, SL) der Softwareeinheiten (A1..A4, D1.. D5),
   - Auswahl eines Übernahmeszenarios aufgrund der Bewertung und
   - Ausführung des ausgewählten Übernahmeszenarios.

2. Verfahren nach Anspruch 1,
**dadurch gekennzeichnet, daß** durch den Ausfall eines Rechner (1, 2, 3, 4) betroffene Softwareeinheiten (A1..A4, D1.. D5) auf einen Reserverechner (4) mit ausreichend freier Kapazität übertragen werden, wenn ein solcher verfügbar ist.

3. Verfahren nach Anspruch 1,
**dadurch gekennzeichnet, daß** die Bestimmung eines Übernahmeszenarios einschließt, daß aktive Softwareeinheiten (A1..A4, D1.. D5) beendet werden zur Schaffung freier Kapazität für die Übernahme von Softwareeinheiten (A1..A4, D1.. D5) ausgefallener Rechner (1, 2, 3, 4).

4. Verfahren nach Anspruch 3,
**dadurch gekennzeichnet, daß** die Gewichtung (L2K, SL) anhand mehrerer Attribute erfolgt, wobei ein erstes Attribut (License to kill) ein Maß für die Macht angibt, andere aktive Softwareeinheiten (A1..A4, D1.. D5) zur Schaffung freier Kapazität beenden zu lassen und ein zweites Attribut (Shutdown limit) ein Maß für die Widerstandsfähigkeit gegenüber der Aufforderung zur Beendigung durch andere Softwarepakte zu deren Übertragung von einem ausgefallenen Rechner (1, 2, 3, 4) angibt.

5. Verfahren nach einem der Ansprüche 1 bis 4,
**dadurch gekennzeichnet, daß** zur Bestimmung eines insgesamt optimalen Übernahmeszenarios die Attribute der auf der Rechneranordnung aktiven sowie der von den Ausfällen betroffenen Softwareeinheiten (A1..A4, D1.. D5) berücksichtigt werden.

6. Verfahren nach Anspruch 5,
**dadurch gekennzeichnet, daß** vor Bestimmung des optimalen Übernahmeszenarios aus den möglichen Übernahmeszenarien die möglichen Übernahmeszenarien zunächst nach vorbestimmten Kriterien sortiert werden.

7. Verfahren nach Anspruch 5 oder 6,
**dadurch gekennzeichnet, daß** zur Bestimmung des optimalen Übernahmeszenarios aus den möglichen Übernahmeszenarien ein Greedy-Algorithmus eingesetzt wird.

8. Verfahren nach einem der Ansprüche 1 bis 7,
**dadurch gekennzeichnet, daß** die Softwareeinheiten (A1..A4, D1.. D5) jeweils ein Betriebssystem und Anwendungen umfassen.

9. Vorrichtung, die eine Anordnung mehrerer Rechner (1, 2, 3, 4) zur Ausführung von Anwendungen und einem Kontrollrechner (5) zur Überwachung der Rechner (1, 2, 3, 4) aufweist, **dadurch gekennzeichnet, daß** die Anordnung Mittel zur Ausführung des Verfahrens nach einem der Ansprüche 1 bis 8 aufweist.

**Claims**

1. Method for operating a server farm having an arrangement of a plurality of computers (1, 2, 3, 4), which are set up to execute a multiplicity of software units (A1..A4, D1..D5), and an additional monitoring computer (5) for monitoring the computers (1, 2, 3, 4) and for intervening in the computers (1, 2, 3, 4), the status of the computers (1, 2, 3, 4) being repeatedly monitored,
   **characterized in that**
   the software units (A1..A4, D1..D5) are assigned a weighting (L2K, SL) according to their importance, and the following method steps are carried out when a computer (1, 2, 3, 4) fails:

   - information relating to which of the computers (1, 2, 3, 4) have failed at the monitoring time and which software units (A1..A4, D1..D5) are affected thereby is collected,
   - a multiplicity of possible, that is to say at least two, transfer scenarios for transferring the software units (A1..A4, D1..D5) affected by the failure(s) to other computers (1, 2, 3, 4) are determined, a transfer scenario respectively specifying which software units (A1..A4, D1..D5) are transferred to which computer (1, 2, 3, 4),
   - these transfer scenarios are assessed using the weighting (L2K, SL) of the software units (A1..A4, D1..D5),
   - a transfer scenario is selected on the basis of the assessment, and
   - the selected transfer scenario is carried out.

2. Method according to Claim 1,
   **characterized in that** software units (A1..A4, D1..D5) affected by the failure of a computer (1, 2, 3, 4) are transferred to a reserve computer (4) with a sufficient amount of free capacity if such a computer is available.

3. Method according to Claim 1,
   **characterized in that** the determination of a transfer scenario involves terminating active software units (A1..A4, D1..D5) in order to provide free capacity for transferring software units (A1..A4, D1..D5) of failed computers (1, 2, 3, 4).

4. Method according to Claim 3,
   **characterized in that** the weighting (L2K, SL) is effected using a plurality of attributes, a first attribute (License to kill) specifying a measure of the power to have other active software units (A1..A4, D1..D5) terminated in order to provide free capacity, and a second attribute (Shutdown limit) specifying a measure of the resistance to the request for termination by other software packages in order to be transferred from a failed computer (1, 2, 3, 4).

5. Method according to one of Claims 1 to 4,
   **characterized in that**, in order to determine an overall optimum transfer scenario, the attributes of the software units (A1..A4, D1..D5) which are active in the computer arrangement and the attributes of the software units (A1..A4, D1..D5) which are affected by the failures are taken into account.

6. Method according to Claim 5,
   **characterized in that**, before the optimum transfer scenario is determined from the possible transfer scenarios, the possible transfer scenarios are first of all sorted according to predetermined criteria.

7. Method according to Claim 5 or 6,
   **characterized in that** a greedy algorithm is used to determine the optimum transfer scenario from the possible transfer scenarios.

8. Method according to one of Claims 1 to 7,
   **characterized in that** the software units (A1..A4, D1..D5) each comprise an operating system and applications.

9. Apparatus having an arrangement of a plurality of computers (1, 2, 3, 4) for executing applications and a monitoring computer (5) for monitoring the computers (1, 2, 3, 4),
**characterized in that** the arrangement has means for carrying out the method according to one of Claims 1 to 8.

**Revendications**

1. Procédé pour exploiter un centre serveur qui présente un arrangement de plusieurs ordinateurs (1, 2, 3, 4), lesquels sont configurés pour exécuter une pluralité d'unités logicielles (A1 ... A4, D1 ... D5), et un ordinateur de contrôle (5) supplémentaire pour surveiller les ordinateurs (1, 2, 3, 4) et pour intervenir dans les ordinateurs (1, 2, 3, 4), une surveillance de l'état des ordinateurs (1, 2, 3, 4) étant effectuée de manière répétitive, **caractérisé en ce qu'**un degré de pondération (L2K, SL) est associé aux unités logicielles (A1 ... A4, D1 ... D5) en fonction de leur importance et les étapes suivantes du procédé sont exécutées en cas de panne d'un ordinateur (1, 2, 3, 4) :

   - Collecte d'informations indiquant lesquels des ordinateurs (1, 2, 3, 4) sont tombés en panne à l'instant du contrôle et lesquelles des unités logicielles (A1 ... A4, D1 .. D5) sont affectées,
   - Détermination d'une pluralité, c'est-à-dire d'au moins deux scénarios de prise en charge pour la prise en charge des unités logicielles (A1 .. A4, D1 ... D5) affectées par la ou les pannes sur d'autres ordinateurs (1, 2, 3, 4), un scénario de prise en charge indiquant à chaque fois quelles unités logicielles (A1 ... A4, D1 ... D5) sont transférées sur quels ordinateurs (1, 2, 3, 4),
   - Évaluation de ces scénarios de prise en charge en utilisant le degré de pondération (L2K, SL) des unités logicielles (A1 ... A4, D1 ... D5),
   - Sélection d'un scénario de prise en charge en se basant sur l'évaluation et
   - Exécution du scénario de prise en charge sélectionné.

2. Procédé selon la revendication 1, **caractérisé en ce que** les unités logicielles (A1 ... A4, D1 ... D5) affectées par la panne d'un ordinateur (1, 2, 3, 4) sont transférées sur un ordinateur de réserve (4) disposant d'une capacité libre suffisante si celui-ci est disponible.

3. Procédé selon la revendication 1, **caractérisé en ce que** la détermination du scénario de prise en charge inclut que les unités logicielles (A1 .. A4, D1 ... D5) sont terminées en vue de réaliser la capacité libre pour la prise en charge des unités logicielles (A1 ... A4, D1 ... D5) des ordinateurs (1, 2, 3, 4) tombés en panne.

4. Procédé selon la revendication 3, **caractérisé en ce que** la pondération (L2K, SL) est effectuée au moyen de plusieurs attributs, un premier attribut (Licence to kill - Permis de détruire) indiquant une mesure de la capacité à terminer les autres unités logicielles (A1.... A4, D1 .. D5) actives en vue de réaliser une capacité libre et un deuxième attribut (Shutdown limit - Limite d'arrêt) indiquant une mesure de la capacité de résistance à une demande de terminaison par d'autres progiciels en vue de leur transfert depuis un ordinateur en panne (1, 2, 3, 4).

5. Procédé selon l'une des revendications 1 à 4, **caractérisé en ce que** les attributs des unités logicielles (A1 ... A4, D1 ... D5) actives sur l'arrangement d'ordinateurs et de celles affectées par les pannes sont pris en compte pour déterminer un scénario de prise en charge global.

6. Procédé selon la revendication 5, **caractérisé en ce que** les scénarios de prise en charge possibles sont tout d'abord triés en fonction de critères prédéfinis avant de déterminer le scénario de prise en charge optimal à partir des scénarios de prise en charge possibles.

7. Procédé selon la revendication 5 ou 6, **caractérisé en ce qu'**un algorithme glouton est utilisé pour déterminer le scénario de prise en charge optimal à partir des scénarios de prise en charge possibles.

8. Procédé selon l'une des revendications 1 à 7, **caractérisé en ce que** les unités logicielles (A1 ... A4, D1 ... D5) comprennent respectivement un système d'exploitation et des applications.

9. Dispositif qui présente un arrangement de plusieurs ordinateurs (1, 2, 3, 4) destinés à exécuter des applications et un ordinateur de contrôle (5) pour surveiller les ordinateurs (1, 2, 3, 4), **caractérisé en ce que** l'arrangement présente des moyens pour mettre en oeuvre le procédé selon l'une des revendications 1 à 8.

## FIG 1

## FIG 2

| | L2K | SL | Aktien | alter Rechner | neuer Rechner |
|---|---|---|---|---|---|
| A1 | 3 | 3 | Übernahme auf 4 | 1 | 4 |
| A2 | 4 | 3 | Beenden | 2 | - |
| A3 | 4 | 2 | Übernahme auf 2 | 3 | 2 |
| A4 | 5 | 4 | Übernahme auf 4 | 3 | 4 |
| D1 | 2 | 2 | - | 2 | 2 |
| D2 | 2 | 2 | - | 2 | 2 |
| D3 | 4 | 1 | Übernahme auf 2 | 3 | 2 |
| D4 | 2 | 3 | - | 3 | - |
| D5 | 1 | 2 | - | 3 | - |

## FIG 3

| | L2K | SL | Softwareeinheiten | alter Rechner | neuer Rechner |
|---|---|---|---|---|---|
| I1 | 4 | 3 | OS1, A1 | 1 | 4 |
| I2 | 2 | 3 | OS2, A2, D1, D2 | 2 | 2 |
| I3 | 2 | 1 | OS3, A3, A4, D4, D5 | 3 | - |

## FIG 4

Überprüfung Rechner ~11

T ~13

Fehler? 12

nein

ja

Sammeln von Informationen über betroffene Softwareeinheiten ~14

Ermittlung der verfügbaren Kapazitäten 15

Bestimmung möglicher Szenarien ~16

Bewertung der Szenarien ~17

Auswahl eines optimalen Szenarios ~18

Übernahme von Softwareeinheiten entsprechend dem Szenario ~19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6088727 A
- WO 03102772 A
- US 6192401 B